# EUROPÄISCHE PATENTSCHRIFT

(11) **EP 1 296 869 B1**
(45) Veröffentlichungstag und Bekanntmachung des Hinweises auf die Patenterteilung: **15.09.2004**
(21) Anmeldenummer: 01960369.5
(22) Anmeldetag: 23.06.2001
(51) Int. Cl.: B62D 6/00, B62D 5/00

(54) **LENKSYSTEM**
STEERING SYSTEM
SYSTEME DE DIRECTION

(30) Priorität: 01.07.2000 DE 10032115
(43) Veröffentlichungstag der Anmeldung: 02.04.2003
(73) Patentinhaber: ZF FRIEDRICHSHAFEN Aktiengesellschaft, 88038 Friedrichshafen (DE)
(72) Erfinder: KALTENBACH, Johannes, 88045 Friedrichshafen (DE); GAZYAKAN, Ünal, 88045 Friedrichshafen (DE); WERRIES, Hartmut, 49143 Bissendorf (DE); PELCHEN, Christoph Dr., 88069 Tettnang (DE)
(86) Internationale Anmeldenummer: PCT/EP2001/007145
(87) Internationale Veröffentlichungsnummer: WO 2002/002391

(56) Entgegenhaltungen:
- DE-C- 19 650 475
- GB-A- 2 344 326

## Beschreibung

Die Erfindung betrifft ein Lenksystem nach der im Oberbegriff von Anspruch 1 näher definierten Art.

Lenksysteme, die nach dem steer-by-wire-Prinzip arbeiten, unterscheiden sich von konventionellen Lenksystemen dadurch, daß keine mechanische Verbindung zwischen dem Lenkhandrad und dem gelenkten Rad besteht. Durch die Auftrennung des Lenksystems fällt das von den konventionellen Lenksystemen über die Lenksäule an das Lenkhandrad gelieferte Drehmoment weg. Das bisher von der Fahrbahn, den Reifen, dem Fahrwerk und dem Übertragungsverhalten des Lenksystems bestimmte Lenkgefühl wird ersatzweise durch einen Lenkradaktuator erzeugt. Die durch einen oder mehrere Kraft-/Drehmomentsensoren erfaßten Kräfte und Drehmomente im Lenkgestänge der gelenkten Räder werden an eine zentrale Steuereinheit weitergeleitet. Über einen Lenkradaktuator wird dem Fahrer in Abhängigkeit des jeweiligen Betriebszustandes eine Rückwirkung weitergegeben, die ähnlich den bei einem konventionellen Lenksystem auftretenden Kräften und Drehmomenten ist.

Im Fahrbetrieb liefern Kraft-/Drehmomentsensoren im Lenkgestänge der gelenkten Räder Kraftsignale, die proportional zu den an den gelenkten Rädern auftretenden Lenkkräften sind. Die höchsten auftretenden Kräfte/Drehmomente werden erfaßt, von einer Steuereinheit ausgewertet und an den Lenkhandradaktuator zur Drehmomenterzeugung am Lenkhandrad weitergeleitet. Die Ansteuerung des Lenkhandradaktuators erfolgt derart, daß der vom Fahrer wahrgenommene Drehwiderstand bzw. Drehmomentverlauf demjenigen entspricht, der von einem konventionellen Lenksystem bei gleicher Kraft-/Drehmomenteinwirkung im Lenkgestänge hervorgerufen worden wäre.

Um eine künstlich Rückwirkung am Lenkhandradaktuator erzeugen zu können, muß die als Radrückwirkung auftretende Spurstangenkraft erfaßt werden. Diese Meßgröße dient dann zur Regelung des erforderlichen Lenkmomentes am Lenkhandrad.
Aus dem Stand der Technik wie Z.B. der DE-A-196 504 75 ist es bekannt, bei Lenksystemen, die einen Elektromotor im Lenkaktuator aufweisen, die Spurstangenkräfte über die Messung des Motorstroms zu ermitteln. Bei Lenksystemen mit hydraulischen Lenkaktuatoren erfolgt die Bestimmung der Spurstangenkräfte über eine Druckmessung. Hierbei tritt jedoch der Nachteil auf, daß bei niedrigen Spurstangenkräften, die beispielsweise bei Geradeausfahrt auftreten, die Messung des Motorstroms bzw. der auftretenden Drücke infolge von Reibungs- und Dämpfungseinflüssen unsensibel reagiert und so zu einem ungenauen Ergebnis führt. Dies hat zur Folge, daß an den Fahrer ein schlechtes Mittengefühl weitergegeben wird, was wiederum zu einem unsicheren Fahrverhalten führt.

Der vorliegenden Erfindung liegt die Aufgabe zugrunde ein Lenksystem darzustellen, bei dem auch kleine Änderungen der Spurstangenkräfte so an den Fahrer weitergegeben werden, daß ihm ein sicheres Fahrgefühl vermittelt wird.

Die der Erfindung zugrundeliegende Aufgabe wird durch ein, auch die kennzeichnenden Merkmale des Hauptanspruchs aufweisendes, gattungsgemäßes Lenksystem gelöst.

Durch gezielte Überlagerung von minimalen Lenkimpulsen, die vom Fahrer nicht wahrgenommen werden können, kann die Empfindlichkeit des Lenksystems dahingehend verbessert werden, daß auch bei niedrigen Spurstangenkräften eine zufriedenstellende Rückmeldung an den Fahrer erfolgt.

Die Erfindung wird anhand eines Ausführungsbeispieles näher erläutert.

Einem erfindungsgemäßen Lenksystem werden minimale Lenkimpulse in Form von Sinusschwingungen überlagert, die der Fahrer nicht als Wank- oder Gierbewegungen wahrnehmen kann. Diese minimalen Lenkimpulse sind in der Regel kleiner als ein Grad Sinus-Lenkwinkel bezogen auf das Lenkhandrad. Beträgt nun beispielsweise die statische Durchzugskraft einer Zahnstange eines Lenkaktuators 200 N, so kann man anhand der Flanken der Sinusschwingung bestimmen, wie groß die vom Elektromotor aufzubringende Kraft in den beiden Richtungen sein muß. Wenn die vom Elektromotor aufzubringende Kraft in der einen Richtung, entsprechend einer Flanke der Sinusschwingung, 150 N und in der anderen Richtung 250 N beträgt, so kann man daraus schließen, daß die außen anliegende Spurstangenkraft 50 N beträgt.

## Patentansprüche

1. Lenksystem mit mindestens einem Lenkradaktuator und mindestens einem Lenkaktuator, die über eine Regelstrecke miteinander verbunden sind, **dadurch gekennzeichnet, daß** dem Lenksystem minimale Lenkimpulse überlagert werden, um die auftretenden Spurstangenkräfte bestimmen zu können.

2. Lenksystem nach Anspruch 1, **dadurch gekennzeichnet, daß** die Lenkimpulse Sinusschwingungen sind.

3. Lenksystem nach Anspruch 1, **dadurch gekennzeichnet, daß** der Betrag der Spurstangenkräfte anhand des Flankenverlaufs der Lenkimpulse bestimmt werden kann.

4. Lenksystem nach Anspruch 1, **dadurch gekennzeichnet, daß** der Lenkaktuator einen Elektromotor aufweist, der auf einen Lenkmechanismus eine Lenkunterstützung ausüben kann.

5. Lenksystem nach Anspruch 1, **dadurch gekennzeichnet, daß** der Lenkradaktuator einen Elektromotor aufweist, der dem Fahrer über das Lenkhandrad ein Drehmoment zurückliefert.

## Claims

1. Steering system with at least one steering wheel actuator and at least one steering actuator, which are connected together via a control system, **characterised in that** minimal steering impulses are superimposed on the steering system in order to enable the track rod forces occurring to be determined.

2. Steering system according to Claim 1, **characterised in that** the steering impulses are sinusoidal oscillations.

3. Steering system according to Claim 1, **characterised in that** the magnitude of the track rod forces can be determined on the basis of the edge characteristic of the steering impulses.

4. Steering system according to Claim 1, **characterised in that** the steering actuator comprises an electric motor which can exert a steering assistance on a steering mechanism.

5. Steering system according to Claim 1, **characterised in that** the steering actuator comprises an electric motor which feeds a torque back to the driver via the steering wheel.

## Revendications

1. Système de direction avec au moins un vérin de volant et au moins un vérin de direction reliés par l'intermédiaire d'un circuit de régulation, **caractérisé en ce que** des impulsions de direction sont superposées au système de direction, afin de pouvoir déterminer les forces exercées sur les barres d'accouplement.

2. Système de direction selon la revendication 1, **caractérisé en ce que** les impulsions de direction sont des vibrations sinusoïdales.

3. Système de direction selon la revendication 1, **caractérisé en ce que** la valeur des forces exercées sur les barres d'accouplement peut être déterminée à l'aide du flanc des impulsions de direction.

4. Système de direction selon la revendication 1, **caractérisé en ce que** le vérin de direction comporte un moteur électrique qui peut réaliser une assistance de direction sur un mécanisme de direction.

5. Système de direction selon la revendication 1, **caractérisé en ce que** le vérin du volant comporte un moteur électrique qui retourne au conducteur un couple de rotation par l'intermédiaire du volant.
